# EUROPÄISCHE PATENTSCHRIFT

(11) **EP 3 753 878 B1**
(45) Veröffentlichungstag und Bekanntmachung des Hinweises auf die Patenterteilung: **19.03.2025**
(21) Anmeldenummer: 20187614.1
(22) Anmeldetag: 17.02.2014
(51) Int. Cl.: B65G 57/00

(54) **PLATTENBEARBEITUNGSANLAGE**
PANEL PROCESSING PLANT
INSTALLATION D'USINAGE DE PANNEAUX

(30) Priorität: 13.03.2013 DE 102013204409
(43) Veröffentlichungstag der Anmeldung: 23.12.2020
(62) Teilanmeldung aus: 14704802.9
(73) Patentinhaber: HOMAG Plattenaufteiltechnik GmbH, 75365 Calw (DE)
(72) Erfinder: Hartmann, Gerhard, 72224 Ebhausen-Rotfelden (DE); Keim, Stefan, 75365 Calw (DE); Kress, Martin, 75382 Althengstett (DE); Martynenko, Sergey, 71083 Herrenberg (DE); Ressel, Robert, 71032 Böblingen (DE); Roller, Karl-Heinz, 75387 Neubulach (DE); Zimbakov, Darko, 71155 Altdorf (DE)
(74) Vertreter: DREISS Patentanwälte PartG mbB

(56) Entgegenhaltungen:
- WO-A1-2012/123033
- DE-A1- 19 705 344
- DE-A1- 2 702 725
- JP-A- H03 128 820
- US-A- 4 692 876

## Beschreibung

Die Erfindung betrifft eine Plattenbearbeitungsanlage gemäß dem Oberbegriff des Anspruchs 1 und ein Verfahren zum Betreiben einer Plattenbearbeitungsanlage gemäß dem Oberbegriff des Anspruchs 10.

Unter dem Begriff Plattenbearbeitungsanlage ist eine Anlage zum maschinellen Bearbeiten von plattenförmigen Werkstücken oder von Stapeln dieser plattenförmigen Werkstücke zu verstehen. Im Folgenden wird für diese zusammenfassend der Begriff Werkstücke verwendet. Das Aufteilen von Werkstücken beispielsweise unter Verwendung einer Säge oder das Einbringen von Lochmustern in die Werkstücke sind hierbei beispielhafte Bearbeitungsprozesse.

Diese Plattenbearbeitungsanlagen umfassen regelmäßig Abstapelplätze, auf welchen die bearbeiteten Werkstücke im Anschluss an die Bearbeitung abgestapelt werden. Bei diesen Abstapelplätzen kann es sich beispielsweise um Europaletten handeln. Das Aufteilen eines plattenförmigen Werkstücks geschieht gemäß einem Schnittplan für dieses Werkstück. Dieser wird in zwei Schritten durchgeführt. In einer ersten Folge von Schnitten, dem sogenannten Längsschnitt werden die plattenförmigen Werkstücke in längliche Werkstückstreifen aufgeteilt. Im Anschluss daran erfolgt eine zweite Folge von Schnitten, ein sogenannter Querschnitt, bei welchem diese Werkstückstreifen in die einzelnen zu fertigenden Werkstücke unterteilt werden.

Ein Problem dieser Anlagen ist die Rate der Entnahme und Abstapelung der bearbeiteten Werkstücke. Diese ist regelmäßig der limitierende Faktor für die Produktivität der Plattenbearbeitungsanlage. Des Weiteren ist die Zusammenstellung der Werkstückstapel auf den Abstapelplätzen oft unzufriedenstellend. Hier können beispielsweise instabil gestapelte Stapel ein Problem bezüglich des Weitertransports darstellen. Unpassende Stapelbildung stellt außerdem ein Problem bezüglich der automatischen Bestückung bei nachfolgenden Bearbeitungsschritten dar.

Die gattungsbildende DE 27 02 725 A1 beschreibt eine Plattenbearbeitungsanlage mit einer Stapeleinrichtung. Die DE 197 05 344 offenbart eine Werkstückbearbeitung- und Stapelvorrichtung. Aus der WO 2012/123033 A1 geht eine Lager- und Kommissionierungsanlage hervor mit einer Anzeigevorrichtung, durch die einer Bedienperson ein Zielbereich auf einer Auftragspalette angezeigt werden kann. Die JP 3-128820 A betrifft eine Vorrichtung, mit der einem Bediener ein Ort angezeigt werden kann, an dem ein Gegenstand gegriffen werden soll.

Aufgabe der vorliegenden Erfindung ist es eine möglichst flexibel einsetzbare und produktive Plattenbearbeitungsanlage zu schaffen.

Diese Aufgabe wird durch eine Plattenbearbeitungsanlage mit den Merkmalen des Anspruchs 1 und durch ein Verfahren zum Betreiben einer Plattenbearbeitungsanlage mit den Merkmalen des Anspruchs 10 gelöst. Weiterbildungen der Erfindung sind in Unteransprüchen genannt. Außerdem finden sich für die Erfindung wichtige Merkmale in der nachfolgenden Beschreibung und in den Zeichnungen, wobei diese Merkmale sowohl in Alleinstellung als auch in unterschiedlicher Kombination für die Erfindung wichtig sein können.

Ein erster Vorteil der erfindungsgemäßen Plattenbearbeitungsanlage besteht darin, dass durch eine Steuereinrichtung für die bearbeiteten Werkstücke, welche auf den Abstapelplätzen abgestapelt werden sollen, dem Bediener der Plattenbearbeitungsanlage Vorgaben für die Stapelbildung gemacht werden. Diese Vorgaben umfassen für jedes spezifische bearbeitete Werkstück Informationen bezüglich einer Soll-Position sowie einer Soll-Ausrichtung, welche jeweils über eine durch die Steuereinrichtung angesteuerte Ausgabeeinrichtung ausgegeben werden. Die Abstapelinformationen werden hierbei über eine Ausgabeeinrichtung dargestellt, nämlich durch eine Visualisierung mittels einer Laser-Projektion oder eines Projektors. In den beiden letztgenannten Fällen ist es besonders vorteilhaft, wenn die Abstapelinformationen in Form der Soll-Position sowie der Soll-Ausrichtung direkt auf die Abstapelplätze projiziert werden.

Die Vorgabe von Informationen bezüglich einer Soll-Position sowie einer Soll-Ausrichtung für jedes spezifische Werkstück ermöglicht einen effizienten Betrieb der Plattenbearbeitungsanlage, erhöht damit ihre Wirtschaftlichkeit und eliminiert Möglichkeiten für menschliche Fehler. Das mit dieser Stapelbildung verbundene hohe Maß an Nachvollziehbarkeit bietet überdies Vorteile im Bereich der Qualitätssicherung.

Eine erste erfindungsgemäße Weiterbildung ist dadurch gekennzeichnet, dass die Vorgabe der Informationen bezüglich der Soll-Position und Soll-Ausrichtung durch die Steuereinrichtung, sowie deren Ausgabe durch die Ausgabeeinrichtung zeitlich angepasst an den Betrieb der Plattenbearbeitungsanlage erfolgen. Eine Ausgabe "zeitlich angepasst an den Betrieb" bedeutet, dass ein zeitlicher Zusammenhang zwischen der Bearbeitung eines spezifischen Werkstücks oder der Ausgabe eines bearbeiteten Werkstücks und der Ausgabe der für dieses Werkstück individuellen Vorgabe besteht. Beispielsweise wird die Vorgabe für ein bearbeitetes Werkstück immer dann ausgegeben, wenn dieses spezifische Werkstück auf einen Entnahmetisch der Plattenbearbeitungsanlage gelangt, und beispielweise solange, bis ein folgendes Werkstück auf den Entnahmetisch gelangt oder der Bediener der Anlage das bearbeitete Werkstück entsprechend der Informationen bezüglich der Soll-Position und Soll-Ausrichtung abgestapelt hat. Dadurch ist gewährleistet, dass bei jedem Abstapelvorgang eines Werkstücks die vorgesehene Stapelbildung erfolgen kann. Hierdurch lässt sich die Produktionsrate der Plattenbearbeitungsanlage deutlich erhöhen.

Vorzugsweise ist auch vorgeschlagen, dass die Steuereinrichtung in die Plattenbearbeitungsanlage integriert ist, einen ein bearbeitetes Werkstück charakterisierenden Parameter ermittelt, und abhängig von dem ermittelten Parameter und einem vorgebbaren Optimierungsparameter die Soll-Position und Soll-Ausrichtung auf dem Abstapelplatz für das bearbeitete Werkstück ermittelt.

Die Vorgabe von Informationen bezüglich der Soll-Position und Soll-Ausrichtung, die einer optimalen Stapelbildung entsprechen, gewährleistet, dass der entstehende Stapel von abgestapelten Werkstücken einen optimalen Aufbau aufweist. Dabei ist das Optimierungskriterium vorgebbar und lässt sich entsprechend an jeweilige Erfordernisse und Gegebenheiten anpassen.

Durch die Integration der Steuereinrichtung in die Plattenbearbeitungsanlage wird ein hoher Bedienkomfort gewährleistet. Außerdem ist eine Kopplung mit weiteren Elementen und Komponenten der Plattenbearbeitungsanlage einfach möglich. In dieser Weise kann zum Beispiel eine Fehlermeldung der Plattenbearbeitungsanlage direkt an die Steuereinrichtung übermittelt werden.

Durch die Ermittlung eines ein bearbeitetes Werkstück charakterisierenden Parameters direkt durch die Steuereinrichtung werden beispielsweise Übertragungsfehler vermieden. Der Parameter kann beispielsweise durch in der Plattenbearbeitungsanlage vorhandene Sensoren im Anschluss an die Bearbeitung der Werkstücke gemessen werden (ein Beispiel hierfür wäre die laser- oder kameragestützte Vermessung der Dimension eines bearbeiteten Werkstücks). Ebenso denkbar ist die Ermittlung aus bereitgestellten Informationen wie einem Schnittplan. Unter einem Schnittplan versteht man hierbei, wie oben bereits ausgeführt, eine Vorgabe bezüglich der Aufteilschnitte für ein plattenförmiges Werkstück. Das Einlesen des oder der Parameter über eine elektronische Schnittstelle, verbunden beispielsweise mit einer vorhergehenden Bearbeitungsstation, stellt eine weitere Möglichkeit dar.

Die erfindungsgemäße Weiterbildung, nach welcher die Steuereinrichtung und ggf. auch die Ausgabeeinrichtung eine von der Plattenbearbeitungsanlage trennbare Einrichtung, beispielsweise ein Personal Computer, ist, welche abhängig von einem das bearbeitete Werkstück charakterisierenden Parameter und einem vorgebbaren Optimierungsparameter die Soll-Position und Soll-Ausrichtung auf dem Abstapelplatz für das bearbeitete Werkstück ermittelt, bietet weitere Vorteile. Beispielsweise ist es möglich die Steuereinrichtung und ggf. auch die Ausgabeeinrichtung bei einer Störung schnell zu ersetzen. Auch eine Aktualisierung oder ein Ersatz veralteter Komponenten wird hierdurch vereinfacht. Außerdem kann die Erstellung des Abstapelplans mit der Erstellung des Schnittplans auf der separaten Einrichtung erfolgen.

Vorzugsweise wird ebenfalls vorgeschlagen, dass der ein bearbeitetes Werkstück charakterisierende Parameter eine Dimension, eine Materialeigenschaft, eine Kommissionierung eines bearbeiteten Werkstücks, ein Folgeziel eines bearbeiteten Werkstücks und/oder eine Form des bearbeiteten Werkstücks ist. Die Charakterisierung von Werkstücken gemäß diesen wichtigen Parametern erlaubt eine ressourcenschonende Optimierung der Stapelbildung, da nur die jeweils relevante Eigenschaft eines Werkstücks im Optimierungsprozess berücksichtigt wird und irrelevante Parameter ausgelassen werden. Eine Charakterisierung bezüglich Kommissionierung stellt hierbei eine Charakterisierung bezüglich vorgegebener Aufträge dar. Eine solche Art der Abstapelung kann beispielsweise dann relevant sein, wenn verschiedene Werkstücke unterschiedliche nachträgliche Bearbeitungsschritte erfordern oder nach Material gruppiert werden müssen.

Bei einer Charakterisierung durch das Folgeziel der einzelnen Werkstücke kann eine Abstapelung entsprechend diesem Kriterium, beispielsweise an unterschiedlichen Stellen eines Abstapelplatzes erfolgen. Hierdurch kann ein Umstapeln vor dem Weitertransport an die nächste Bearbeitungsstation vermieden werden. Die Charakterisierung bezüglich Dimension und Materialeigenschaft der bearbeiteten Werkstücke erlaubt eine Stapelung, bei der beispielsweise die schwersten Werkstücke zuunterst gestapelt werden, wodurch ein Umkippen eines Stapels während des Transports vermieden wird.

Im Sinne der Erfindung ist ebenso, dass der vorgebbare Optimierungsparameter mindestens einer ist aus der Liste: ein Schwerpunkt eines am Abstapelplatz entstehenden Stapels aus bearbeiteten Werkstücken, eine Sortierung bezüglich des Folgeziels der bearbeiteten Werkstücke eines am Abstapelplatz entstehenden Stapels aus bearbeiteten Werkstücken, eine Massenverteilung eines am Abstapelplatz entstehenden Stapels aus bearbeiteten Werkstücken, eine Dichte eines am Abstapelplatz entstehenden Stapels aus bearbeiteten Werkstücken, eine kommissionsgemäße Aufteilung eines am Abstapelplatz entstehenden Stapels aus bearbeiteten Werkstücken, eine statische Stabilität eines am Abstapelplatz entstehenden Stapels aus bearbeiteten Werkstücken, und eine Form eines am Abstapelplatz entstehenden Stapels aus bearbeiteten Werkstücken, eine Reduktion von Überstand von bearbeiteten Werkstücken über den Umriss des Abstapelplatzes bei der Bildung eines am Abstapelplatz entstehenden Stapels aus bearbeiteten Werkstücken, eine Höhe eines am Abstapelplatz entstehenden Stapels aus bearbeiteten Werkstücken, eine Grundflächengröße (Länge und Breite) eines am Abstapelplatz entstehenden Stapels aus bearbeiteten Werkstücken, eine Sortierung nach Zusatzinformationen eines am Abstapelplatz entstehenden Stapels aus bearbeiteten Werkstücken insbesondere nach Parametern bezüglich einer Nachbearbeitung.

Beispielsweise erhöht ein möglichst stabiler Aufbau eines am Abstapelplatz entstehenden Stapels aus bearbeiteten Werkstücken die Sicherheit im weiteren Transport dieses Stapels. Alternativ hat eine Optimierung bezüglich der Dichte eines am Abstapelplatz entstehenden Stapels aus bearbeiteten Werkstücken den Vorteil, dass auf einer Palette möglichst viele bearbeitete Werkstücke transportiert werden können. Eine kommissionsgemäße Aufteilung eines am Abstapelplatz entstehenden Stapels aus bearbeiteten Werkstücken ermöglicht es unter anderem, die benötigte Zeit für ein Umstapeln vor dem Abpacken für einen Endverbraucher zu reduzieren, was mit einer Kostenreduktion verbunden ist. Das Vermeiden von Werkstücken, die nach dem Abstapeln über die Umrisse der Abstapelplätze herausragen, erhöht die Sicherheit für den Weitertransport der Werkstückstapel und reduziert das Risiko von Beschädigungen.

Die Verwendung eines Werkstückpuffers, welcher das Zwischenlagern eines bearbeiteten aber noch nicht abzustapelnden Werkstücks ermöglicht, wird vorzugsweise ebenfalls vorgeschlagen. Dieser Werkstückpuffer ist im Materialfluss nach der Bearbeitungseinrichtung angeordnet. Er kann beispielsweise als Luftkissentisch ausgeführt sein. Luftkissentische haben generell den Vorteil, dass auf ihnen eine materialschonende und leichtgängige Handhabung von Werkstücken durch einen Benutzer möglich ist.

Vorzugsweise ist des Weiteren die Berücksichtigung der Verwendung des Werkstückpuffers durch die Steuereinrichtung bei der Ermittlung der Soll-Position und Soll-Ausrichtung der Werkstücke sowie das Erzeugen einer Vorgabe des Verwendungszeitpunkts und gegebenenfalls auch der Verwendungsart des Werkstückpuffers. Auf einem solchen Werkstückpuffer werden Werkstücke nach einem Bearbeitungsschritt zwischengelagert, wenn es von Vorteil ist, zuerst anschließend produzierte Teile auf dem oder den Abstapelplätzen abzustapeln, und erst danach das oder die zuvor produzierten und zwischengelagerten Werkstücke abzustapeln.

Die Verwendung eines solchen Werkstückpuffers und insbesondere dessen Berücksichtigung in der Optimierung ermöglicht eine variablere Abstapelfolge. Der durch den Werkstückpuffer gegebene zusätzliche Freiheitsgrad in der durchgeführten Optimierung der Abstapelung erhöht den erreichbaren Optimierungsgrad der vorgegebenen Stapelfolge. Ein solcher zusätzlicher Freiheitsgrad, welcher durch die Verwendung eines Werkstückpuffers realisiert wird, erlaubt auch die Verwendung von für die Abstapelung ohne Werkstückpuffer an sich ungünstigen Schnittplänen bei gleichbleibend optimaler Stapelfolge der bearbeiteten Werkstücke.

Konkret kann dies bedeuten, dass die Steuereinrichtung abhängig von dem ermittelten das bearbeitete Werkstück charakterisierenden Parameter sowie abhängig von dem Optimierungsparameter einen Bedarf für eine Zwischenlagerung eines bearbeiteten Werkstücks auf dem Werkstückpuffer ermittelt, und dass die Steuereinrichtung die Ausgabeeinrichtung so ansteuert, dass diese den Bedarf für eine Zwischenlagerung anzeigt und dieses Ausgeben vorzugsweise zeitlich angepasst an den Betrieb der Plattenbearbeitungsanlage erfolgt.

Im Sinne der Erfindung ist hierbei auch, dass der Bedarf für eine Zwischenlagerung über ein optisches oder akustisches oder über ein Vibrationssignal bzw. ein haptisches Signal angezeigt wird. Dies entlastet den Benutzer, beschleunigt den Betrieb und verhindert Fehlabstapelungen.

In einer weiteren Ausführungsform der Erfindung wird vorgeschlagen, dass die Plattenbearbeitungsanlage eine Einrichtung, beispielsweise eine Kamera, zur Werkstückerfassung umfasst, welche eine Ist-Position und Ist-Ausrichtung der abgestapelten Werkstücke erfassen kann und diese Information an die Steuereinrichtung übermittelt, und dass die Steuereinrichtung diese Information bei der Ermittlung der Soll-Position und Soll-Ausrichtung für ein nachfolgendes bearbeitetes Werkstück auf dem Abstapelplatz berücksichtigt. Dabei ist eine Erfassung der Ist-Position und Ist-Ausrichtung über eine Bedienereingabe, beispielsweise über einen berührungsempfindlichen Bildschirm ebenso im Sinne der Erfindung. Eine solche dynamische Optimierung der Soll-Position und Soll-Ausrichtung der bearbeiteten Werkstücke bietet den Vorteil, dass eine Fehlpositionierung der bearbeiteten Werkstücke auf dem Abstapelplatz, beispielsweise durch einen Bediener der Plattenbearbeitungsanlage oder eine Abstapelvorrichtung, von der Steuereinrichtung berücksichtigt und der folgende Stapelaufbau entsprechend angepasst werden kann. Dies ermöglicht das Kompensieren von menschlichen oder maschinellen Fehlern im Betrieb der Plattenbearbeitungsanlage, und der Bediener der Plattenbearbeitungsanlage kann gegebenenfalls über Nachteile der Änderung informiert beziehungsweise vor diesen gewarnt werden. Somit wird der Betrieb der Plattenbearbeitungsanlage insgesamt robuster oder weniger fehler- bzw. störanfällig.

Eine weitere erfindungsgemäße Weiterbildung ist dadurch gekennzeichnet, dass sie eine Einrichtung umfasst, welche eine Produktion von als Ausschuss anzusehenden Werkstücken erfasst und diese Information an die Steuereinrichtung übermittelt, und dass die Steuereinrichtung diese Information bei der Ermittlung der Soll-Position und Soll-Ausrichtung für mindestens ein nachfolgendes bearbeitetes Werkstück auf dem Abstapelplatz berücksichtigt. Diese Erfassung kann automatisch, beispielsweise über eine Kamera, oder auch bedienergestützt über eine Eingabeeinrichtung erfolgen. Die Folgeschritte des Abstapelns werden dann neu optimiert. Hierdurch wird ein unterbrechungsfreies Betreiben der Plattenbearbeitungsanlage selbst dann ermöglicht, wenn im Produktions- oder Bearbeitungsschritt Fehler auftreten und Ausschussteile produziert werden. Somit werden Produktionsstopps oder Produktionsunterbrechungen vermieden, womit der gesamte Betrieb der Plattenbearbeitungsanlage wirtschaftlicher wird.

Eine erfindungsgemäße Weiterbildung ist auch, dass mehrere Optimierungsparameter vorgebbar sind, und dass den mehreren Optimierungsparametern Gewichtungsfaktoren zuweisbar sind, die unterschiedlich oder auch gleich sein können. Die Vorgabe mehrerer Optimierungsparameter hat den Vorteil, dass unterschiedliche Zielstellungen in der Stapelbildung berücksichtigt werden können. Dies ist vorteilhaft, wenn zum Beispiel auf Kommissionierung gestapelt werden muss, jedoch ebenfalls möglichst stabile Stapel entstehen müssen. Die Zuweisbarkeit von Gewichtungsfaktoren für verschiedene Optimierungsparameter erlaubt eine Feineinstellung der Optimierung der Stapelfolge der bearbeiteten Werkstücke. Hierdurch kann die Stapelbildung feinjustiert werden, und ein wirtschaftlicher Betrieb der Plattenbearbeitungsanlage ist gewährleistet.

Vorzugsweise ist ebenso, dass die Plattenbearbeitungsanlage eine Vorrichtung zum Erstellen von Etiketten aufweist, welche dann auf den Werkstücken angebracht werden können und Informationen über die Soll-Position und Soll-Ausrichtung der Werkstücke und dies insbesondere in Form von Piktogrammen enthalten. Ein Anbringen von Informationen über die Soll-Position und Soll-Ausrichtung auf den einzelnen Werkstücken in Form von Piktogrammen hat den Vorteil, dass selbst bei einem Umfallen eines Stapels die Soll-Position und Soll-Ausrichtung der einzelnen Werkstücke rekonstruierbar ist und im Stapelwiederaufbau einfach nachvollzogen werden kann. Des Weiteren ist bei Anlieferung eines Stapels an eine neue Bearbeitungsstation durch einfache visuelle Inspektion ersichtlich, wie die Teile auf dem gerade gelieferten Stapel abgestapelt sind.

Vorzugsweise ist auch denkbar, dass die Plattenbearbeitungsanlage eine elektronische Schnittstelle aufweist, über welche Informationen bezüglich Ist- und oder Soll-Position und -Ausrichtung der Werkstücke elektronisch kommuniziert werden können. Durch eine solche erfindungsgemäße Fortbildung wird eine rasche und sichere Kommunikation aller relevanten Stapelbildungsinformationen beispielsweise an weitere Bearbeitungsstationen, automatische Handhabungsstationen, etc. gewährleistet. Dies erlaubt eine wirtschaftlich vorteilhafte Kombination mehrerer Bearbeitungsstationen und einen reibungslosen Übergang von Werkstückstapeln von einer Bearbeitungsstation zur anderen.

Vorzugsweise ist weiterhin, dass die Steuereinrichtung abhängig von dem mindestens einen vorgebbaren Optimierungsparameter eine Reihenfolge einer Abarbeitung von Schnittplänen festlegt. Eine solche Anpassung der Reihenfolge der Abarbeitung von Schnittplänen hat den Vorteil, dass beispielsweise ein Schnittplan mit großformatigen bearbeiteten Werkstücken vor einem Schnittplan mit kleinformatigen bearbeiteten Werkstücken abgearbeitet werden kann, und dass infolgedessen die großformatigen bearbeiteten Werkstücke auch zuerst abgestapelt werden können, ohne dass dafür Werkstücke zwischengelagert oder umgestapelt werden müssen.

Vorzugsweise vorgeschlagen wird auch, dass die Steuereinrichtung abhängig von dem mindestens einen vorgebbaren Optimierungsparameter in dem aktuellen oder einem der folgenden Schnittpläne eine Reihenfolge einer Produktion von Werkstücken innerhalb eines Werkstückstreifens verändert bzw. festlegt, dies entspricht einer Änderung der Reihenfolge der Querschnitte. Ebenso erfindungsgemäß ist die Veränderung oder Festlegung der Reihenfolge der Längsschnitte durch die Steuereinrichtung in dem aktuellen oder einem der folgenden Schnittpläne, und dies abhängig von dem mindestens einen vorgebbaren Optimierungsparameter. Eine solche Optimierung entspricht also einer Veränderung oder Festlegung der Reihenfolge der zu produzierenden Werkstückstreifen. Durch die Möglichkeit einer Änderung der Produktionsreihenfolge der einzelnen bearbeiteten Werkstücke wird die Zahl der Freiheitsgrade bezüglich der Stapeloptimierung erhöht, so dass den vorgegebenen Optimierungskriterien besser entsprochen werden kann. Dabei beeinflussen diese Änderungen die Verschnittoptimierung des Schnittplans nicht.

Im Sinne der Erfindung ist auch, dass dann, wenn eine statische Stabilität eines am Abstapelplatz entstehenden Stapels aus bearbeiteten Werkstücken ein Optimierungsparameter ist, die Steuereinrichtung für ein Stabilisationsstück eine Soll-Position und Soll-Ausrichtung auf dem Abstapelplatz ermittelt und die Ausgabeeinrichtung so ansteuert, dass diese die ermittelte Soll-Position und Soll-Ausrichtung auf dem Abstapelplatz für das Stabilisationsstück ausgibt und dieses Ausgeben vorzugsweise zeitlich angepasst an den Betrieb der Plattenbearbeitungsanlage erfolgt. Durch die Verwendung von Stabilisationsstücken, also Stücken, die keine eigentlichen Werkstücke darstellen, kann die Stapelfestigkeit weiter erhöht werden.

Vorgeschlagen wird auch, dass das Stabilisationsstück ein Verschnittstück ist oder aus einem solchen hergestellt ist. Die Verwendung von Verschnittstücken als Stabilisationsstücke ist besonders vorteilhaft, da dadurch ein zusätzlicher Bedarf an Material zur Fertigung solcher Stabilisationsstücke vermieden wird. Das Verschnittstück kann aus dem aktuell oder einem vorhergehend abgearbeiteten Schnittplan stammen.

Nachfolgend wird die Erfindung anhand der beiliegenden Zeichnung erläutert. In dieser zeigen:
- Figur 1: eine perspektivische Darstellung einer Plattenbearbeitungsanlage mit mehreren Abstapelplätzen und einem Werkstückpuffer;
- Figur 2: eine Piktogrammdarstellung einer Werkstückanordnung auf einem der Abstapelplätze;
- Figuren 3a-3c: eine Darstellung einer grafischen Benutzeroberfläche zur Anzeige der optimierten Stapelfolge für unterschiedliche Anzeigeszenarien;
- Figur 4: eine perspektivische Darstellung eines bezüglich Dichte optimierten Werkstückstapels;
- Figur 5: eine perspektivische Darstellung eines bezüglich Kommissionierung optimierten Werkstückstapels;
- Figur 6: perspektivische Darstellung eines bezüglich Kommissionierung optimierten Werkstückstapels mit überstehenden Werkstücken;
- Figur 7: ein Flussdiagramm für ein Verfahren zum Optimieren der Abstapelung von Werkstücken; und
- Figur 8: ein Schnittplan vor und nach einer Optimierung der Reihenfolge einer Produktion von Werkstücken innerhalb eines Werkstückstreifens im Bezug auf ein Abstapeln.

In den verschiedenen Figuren der Zeichnungen sind einander entsprechende Bauteile, Elemente und Bereiche mit gleichen Bezugszeichen versehen.

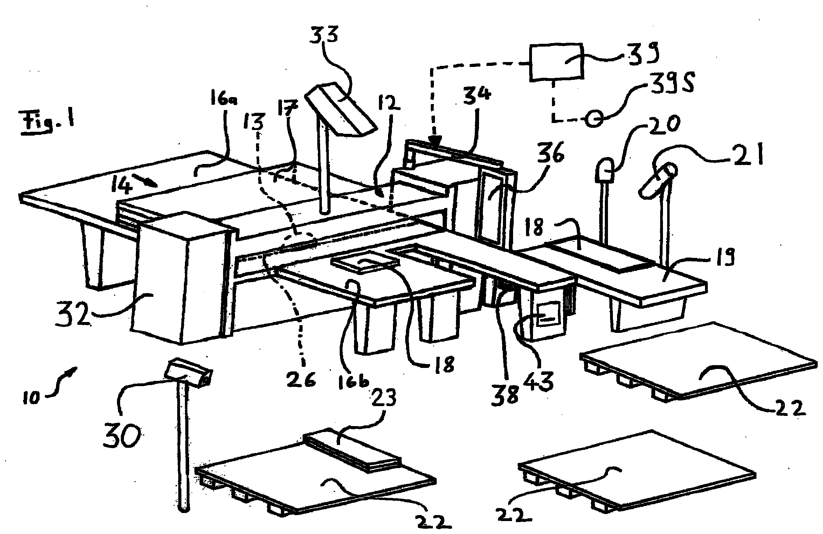

Eine Plattenbearbeitungsanlage trägt in Figur 1 insgesamt das Bezugszeichen 10. Sie umfasst eine Werkstückbearbeitungsstation 12, die in diesem Beispiel in Form einer Aufteilstation bzw., noch konkreter, einer auf einem nicht dargestellten Sägewagen angeordneten Aufteilsäge 13 in Form eines Kreissägeblatts ausgeführt ist. Eine Werkstücktransportrichtung ist in Figur 1 durch einen Pfeil mit dem Bezugszeichen 14 angegeben. In Richtung der Werkstücktransportrichtung 14 gesehen ist jeweils vor und hinter der Werkstückbearbeitungsstation 12 ein Werkstückauflagetisch in die Plattenbearbeitungsanlage 10 integriert, wobei der vor der Werkstückbearbeitungsstation 12 angeordnete Werkstückauflagetisch ein als Rollentisch ausgeführter Zuführtisch 16a und der hinter der Werkstückbearbeitungsstation 12 angeordnete Werkstückauflagetisch ein als Luftkissentisch ausgeführter Entnahmetisch 16b ist. Der Zuführtisch 16a dient zum Zuführen darauf aufliegender großformatiger plattenförmiger Werkstücke 17 zu der Werkstückbearbeitungsstation 12, und der Entnahmetisch 16b dient zum Entnehmen von darauf aufliegenden bearbeiteten Werkstücken 18, welche die Werkstückbearbeitungsstation 12 verlassen.

Neben dem Entnahmetisch 16b ist ein Werkstückpuffer 19 angeordnet, welcher in diesem Beispiel ebenfalls als Luftkissentisch ausgeführt ist. An diesem Werkstückpuffer 19 befindet sich eine Signaleinrichtung 20, in diesem Beispiel als Leuchtsignalanzeige ausgeführt, sowie eine Ausgabeeinrichtung in Form einer Anzeigeeinrichtung 21, ausgeführt als Laserprojektionsanzeige.

In Figur 1 ebenfalls dargestellt sind drei Abstapelplätze 22 in Form von auf dem Boden stehenden Europaletten, welche in Werkstücktransportrichtung 14 gesehen hinter dem Entnahmetisch 16b angeordnet sind. Auf einem der Abstapelplätze 22 liegen bereits abgestapelte Werkstücke 23 auf. Die Werkstückbearbeitungsstation 12 umfasst eine Aufteil- oder Sägelinie 26. Der oben erwähnte Sägewagen und damit die Aufteilsäge 13 kann längs zu dieser Sägelinie 26 bewegt werden. Auf die Abstapelplätze 22 gerichtet ist eine Erfassungseinrichtung 30 beispielsweise in Form einer Videokamera. Die Sägelinie 26 verläuft innerhalb einer Rahmenkonstruktion 32 der Werkstückbearbeitungsstation 12.

An der Rahmenkonstruktion 32 ist eine Erfassungseinrichtung 33 angebracht, welche als Kamera ausgeführt ist. Über einen Schwenkarm 34 ist eine Ausgabeeinrichtung in Form einer Anzeigeeinrichtung 36, ausgeführt als berührungssensitiver Flachbildschirm, an der Werkstückbearbeitungsstation 12 angebracht. Dieser kann von der Bedienperson auch zur Eingabe von Daten verwendet werden, wie später noch dargelegt werden wird. Ein Bedienelement 38, beispielsweise eine Tastengruppe, ist am Entnahmetisch 16b angebracht. Das Bedienelement 38 und die Anzeigeeinrichtung 36 sind mit einer Steuereinrichtung 39 verbunden, welche wiederum mit einer elektronischen Schnittstelle 39S verbunden ist. In diesem Ausführungsbeispiel ist ferner eine Vorrichtung 43 zum Erstellen von Etiketten als Etikettendrucker ausgeführt und in den Entnahmetisch 16b integriert.

Die Plattenbearbeitungsanlage 10 wird in folgender Weise betrieben: Ein zu bearbeitendes Werkstück 17 wird auf den Zuführtisch 16a aufgelegt. Durch ein nicht dargestelltes Vorschubmittel, bei dem es sich typischerweise aber um einen portalartig ausgeführten Programmschieber mit daran angebrachten Spannzangen handelt, wird es auf dem Zuführtisch 16a in Richtung zu der Bearbeitungsstation 12 hin bewegt. Nach Vorschubende wird das zu bearbeitende Werkstück 17 dann in der Werkstückbearbeitungsstation 12 bearbeitet, vorliegend also aufgeteilt bzw. gesägt. Die nach dem Sägen zu entnehmenden, also bearbeiteten Werkstücke 18 verlassen die Werkstückbearbeitungsstation 12 über den Entnahmetisch 16b.

Vom Entnahmetisch 16b werden die bearbeiteten Werkstücke 18 von einer Bedienperson aus der Plattenbearbeitungsanlage 10 entnommen. Nach der Entnahme werden die Werkstücke 18 auf den Abstapelplätzen 22 entweder direkt abgestapelt oder auf dem Werkstückpuffer 19 zwischengelagert. Ob ein spezifisches bearbeitetes Werkstück 18 abgestapelt oder auf dem Werkstückpuffer 19 zwischengelagert werden soll, wird über eine grafische Benutzeroberfläche auf der Anzeigeeinrichtung 36, oder mittels der Laserprojektionsanzeige 21 dargestellt. Im Fall einer Zwischenlagerung auf dem Werkstückpuffer 19 wird dies zusätzlich über die Signaleinrichtung 20, hier in Form einer Leuchtsignalanzeige angezeigt.

Im Fall eines Abstapelns auf einem der Abstapelplätze 22 wird auf der Anzeigeeinrichtung 36 zusätzlich für das spezifische auf dem Entnahmetisch 16b liegende Werkstück 18 eine optimierte Soll-Position und Soll-Ausrichtung auf einem der Abstapelplätze 22 dargestellt, wie weiter unten noch stärker im Detail erläutert werden wird. Diese Informationen können vom Bediener der Anlage 10 berücksichtigt werden, indem er das bearbeitete Werkstück 18, entsprechend der Darstellung auf der Anzeigeeinrichtung 36, abstapelt. Hierdurch kann eine optimale Betriebsweise der Plattenbearbeitungsanlage 10 erreicht werden. Die optimierte Soll-Position und Soll-Ausrichtung wird ebenfalls mittels der Laserprojektionsanzeige 21 dargestellt. Hierbei ist es besonders vorteilhaft, wenn die optimierte Soll-Position und Soll-Ausrichtung direkt auf den Abstapelplatz 22 in Form einer Projektion des abzustapelnden Werkstücks dargestellt werden. Eine Ausgabe der Informationen bezüglich einer optimierten Soll-Position und Soll-Ausrichtung ist ebenso über ein in diesem Beispiel nicht dargestelltes akustisches Leitsystem, beispielweise einen Lautsprecher, möglich.

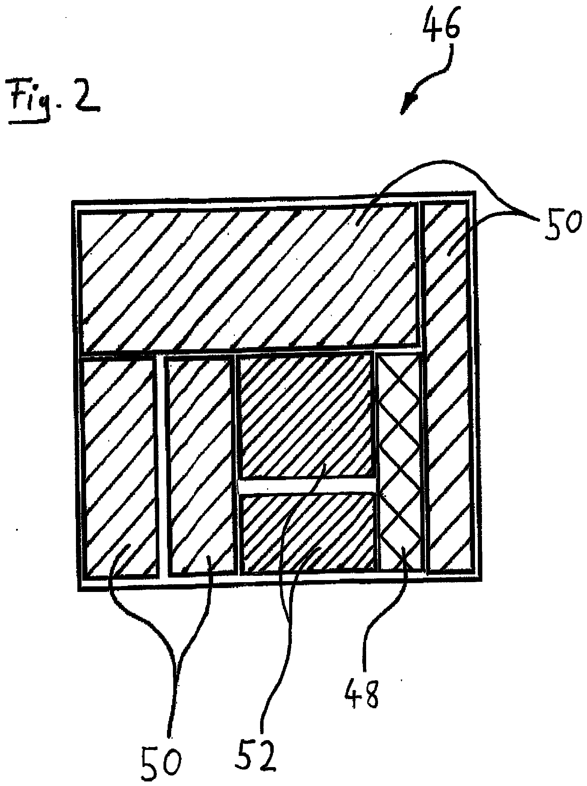

In Figur 2 ist ein Piktogramm 46 einer von der Steuereinrichtung 39 ermittelten optimalen Werkstückabstapelung auf einem Abstapelplatz 22 dargestellt. Es wird mittels der Laserprojektionsanzeige 21 dargestellt, wenn das spezifische bearbeitete Werkstück 18 auf dem Entnahmetisch 16b liegt, und außerdem mittels des Etikettendruckers 43 erzeugt. Die abhängig von bestimmten und weiter unten noch stärker im Detail erläuterten Parametern von der Steuereinrichtung 39 ermittelte Soll-Position und Soll-Ausrichtung eines abzustapelnden Werkstückes 18 sind in der piktografischen Darstellung durch eine entsprechende Farbe, in diesem Beispiel durch einen Werkstückumriss 48 oder in sonstiger Weise grafisch hervorgehoben. Als Orientierungshilfe sind Position und Ausrichtung übriger, bereits abgestapelter Werkstücke 23 ebenso dargestellt, in diesem Beispiel als Werkstückumrisse 50. Ebenso als Orientierungshilfe sind Position und Ausrichtung folgender, abzustapelnder Werkstücke 18 dargestellt, in diesem Beispiel ebenso als Werkstückumrisse 52. Ein solches Piktogramm 46 kann als Etikett auf den einzelnen Werkstücken 42 angebracht werden, wodurch eine Rekonstruktion einer Stapelfolge ermöglich wird.

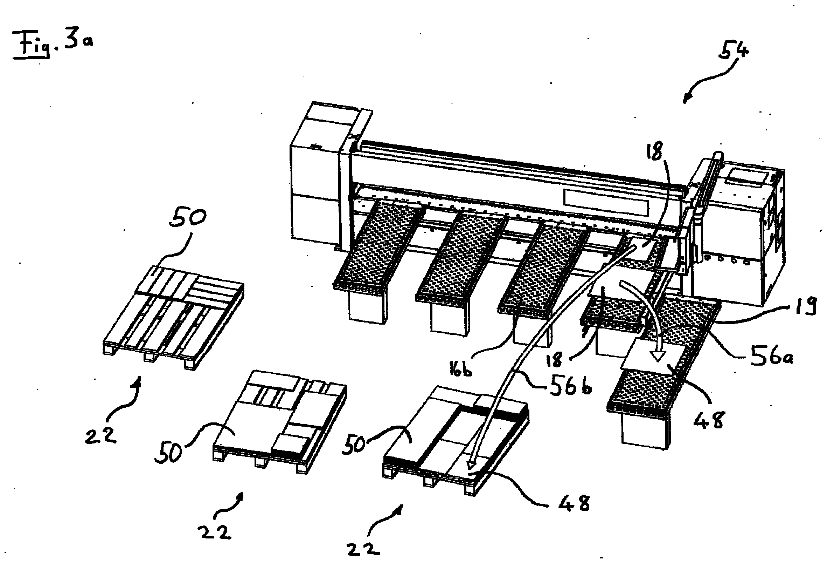

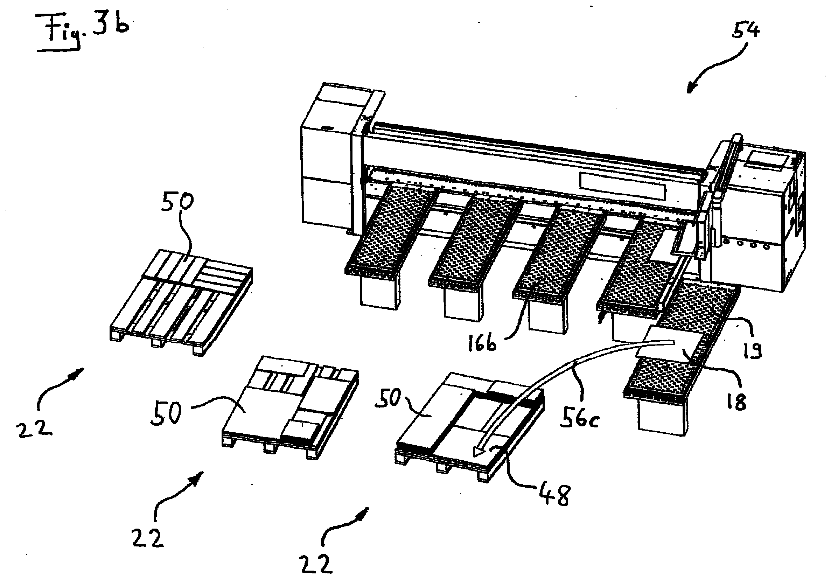

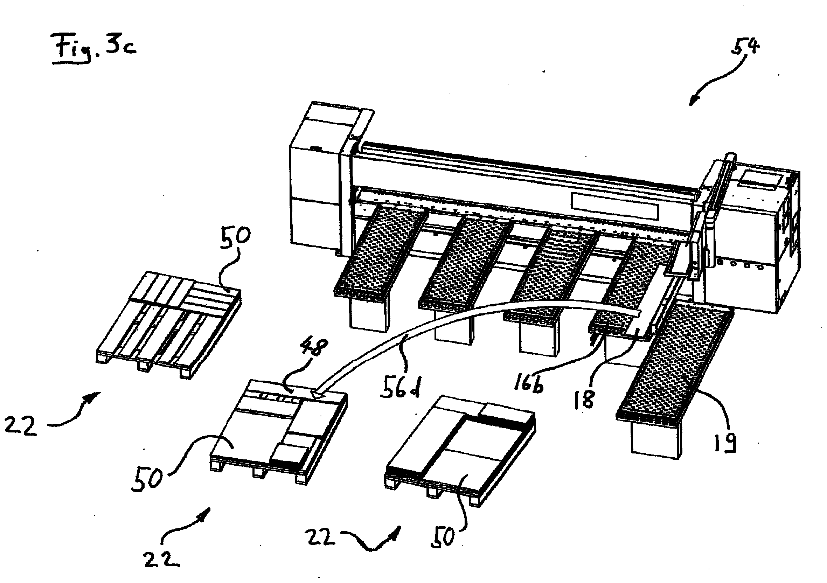

Die Figuren 3a, 3b und 3c zeigen eine grafische Benutzeroberfläche 54, wie sie auf der Anzeigeeinrichtung 36 dargestellt wird, für unterschiedliche Anzeigeszenarien. Schematisch dargestellt ist der in Werkstücktransportrichtung 14 auf die Werkstückbearbeitungsstation 12 folgende Entnahmetisch 16b. An diesen angeschlossen dargestellt ist der Werkstückpuffer 19.

Bei der grafischen Benutzeroberfläche von Figur 3a sind gerade vom Entnahmetisch 16b zu entnehmende bearbeitete Werkstücke 18 als auf dem Entnahmetisch 16b liegend und im Wesentlichen maßstabsgerecht dargestellt. Bereits abgestapelte Werkstücke 23 sind ebenfalls als auf den Abstapelplätzen 22 befindlich dargestellt (es versteht sich, dass die vorliegend zum besseren Verständnis in die Figuren 3a-3c eingezeichneten Bezugszeichen auf der grafischen Benutzeroberfläche der Anzeige 36 im realen Betrieb nicht vorhanden sind). Zwei Pfeile 56a und 56b zeigen der Bedienperson an, dass das eine gerade auf dem Entnahmetisch 16b liegende Werkstück 18 auf dem Werkstückpuffer 19 abgelegt werden soll (Pfeil 56a) während das andere, nachfolgend produzierte Werkstück 18 abgestapelt werden soll (Pfeil 56b). Die optimierte Soll-Position (rechts vorne) und Soll-Ausrichtung ist durch die Umrisse 48 dargestellt.

Gemäß der in Figur 3b dargestellten Benutzeroberfläche der Anzeigeeinrichtung 36 soll das gerade auf dem Werkstückpuffer 19 liegende Werkstück 18 gemäß dem Pfeil 56c auf dem äußersten rechten Abstapelplatz 22 abgestapelt werden, und zwar dort im vorderen rechten Eck (Position) und so, dass eine Längsachse des Werkstücks 18 transversal zu einer Längsachse des Entnahmetisches 16b ausgerichtet ist (Ausrichtung).

Gemäß der in Figur 3c dargestellten Benutzeroberfläche der Anzeigeeinrichtung 36 soll das auf dem Entnahmetisch 16b liegende Werkstück 18 gemäß dem Pfeil 56d auf dem mittleren Abstapelplatz 22 abgestapelt werden, und zwar dort mittig im Bereich des hinteren Randes (Position) und so, dass die Längsachse des Werkstücks 18 quer zur Längsachse des Entnahmetisches 16b ist (Ausrichtung).

Zur Ermittlung der von der Anzeigeeinrichtung 36 zur Anzeige gebrachten Informationen bezüglich der Soll-Position und Soll-Ausrichtung des abzustapelnden Werkstücks 18 zum Zeitpunkt, wenn das entsprechende abzustapelnde Werkstück 18 auf dem Entnahmetisch 16b oder dem Werkstückpuffer 19 liegt (die Anzeige erfolgt also zeitlich angepasst an den Betrieb der Plattenbearbeitungsanlage 10), werden in der Steuereinrichtung 39 verschiedene Parameter verarbeitet:
Wie bereits oben erwähnt, ermittelt und verarbeitet die Steuereinrichtung 39 mindestens einen das bearbeitete Werkstück 18 charakterisierenden Parameter. Hierbei kann es sich um eine Dimension, eine Materialeigenschaft, eine Kommissionierung des Werkstücks 18, ein Folgeziel des Werkstücks 18 und/oder eine Form des Werkstücks 18 handeln. Zur Ermittlung der Dimension (Länge, Breite, Dicke) ist die Erfassungseinrichtung 33 (ausgeführt beispielsweise als Kamera oder Laserscanner) im Bereich des Entnahmetisches 16b vorgesehen, welche die entsprechenden Signale an die Steuereinrichtung 39 liefert. Die Materialeigenschaft kann alternativ beispielsweise bei der Eingabe des Schnittplans oder zu einem anderen Zeitpunkt manuell eingegeben werden, zum Beispiel über den berührungsempfindlichen Bildschirm 36.

Ferner kennt und verarbeitet die Steuereinrichtung 39 mindestens einen Optimierungsparameter, der vorab von der Bedienperson beispielsweise bei der Eingabe der Schnittparameter oder zu einem anderen Zeitpunkt gewählt wurde. Als Optimierungsparameter kommen in Frage: ein Schwerpunkt eines am Abstapelplatz 22 entstehenden Stapels aus bearbeiteten Werkstücken 18, eine Sortierung bezüglich des Folgeziels der Werkstücke 18 eines am Abstapelplatz 22 entstehenden Stapels aus bearbeiteten Werkstücken 18, eine Massenverteilung eines am Abstapelplatz 22 entstehenden Stapels aus bearbeiteten Werkstücken 18, eine Dichte eines am Abstapelplatz 22 entstehenden Stapels aus bearbeiteten Werkstücken 18, eine kommissionsgemäße Aufteilung eines am Abstapelplatz 22 entstehenden Stapels aus bearbeiteten Werkstücken 18, eine statische Stabilität eines am Abstapelplatz 22 entstehenden Stapels aus bearbeiteten Werkstücken 18, eine Form eines am Abstapelplatz 22 entstehenden Stapels aus bearbeiteten Werkstücken 18, eine Reduktion von Überstand von Werkstücken 18 über die Umrisse des Abstapelplatzes 22 bei der Bildung eines am Abstapelplatz 22 entstehenden Stapels aus bearbeiteten Werkstücken 18, eine Höhe eines am Abstapelplatz 22 entstehenden Stapels aus bearbeiteten Werkstücken 18, eine Grundflächengröße (Länge und Breite) eines am Abstapelplatz 22 entstehenden Stapels aus bearbeiteten Werkstücken 18, und/oder eine Sortierung nach Zusatzinformationen eines am Abstapelplatz 22 entstehenden Stapels aus bearbeiteten Werkstücken 18.

Möglich sind auch die Wahl mehrerer Optimierungsparameter und deren Gewichtung mittels Gewichtungsfaktoren. So kann beispielsweise die Optimierung nach einem Schwerpunkt möglichst nahe in der Mitte des Abstapelplatzes 22 einen Gewichtungsfaktor von 0,8 aufweisen, und die Optimierung nach einer möglichst gleichmäßigen Massenverteilung einen Gewichtungsfaktor von 0,2. Denkbar sind aber auch gleiche Gewichtungsfaktoren.

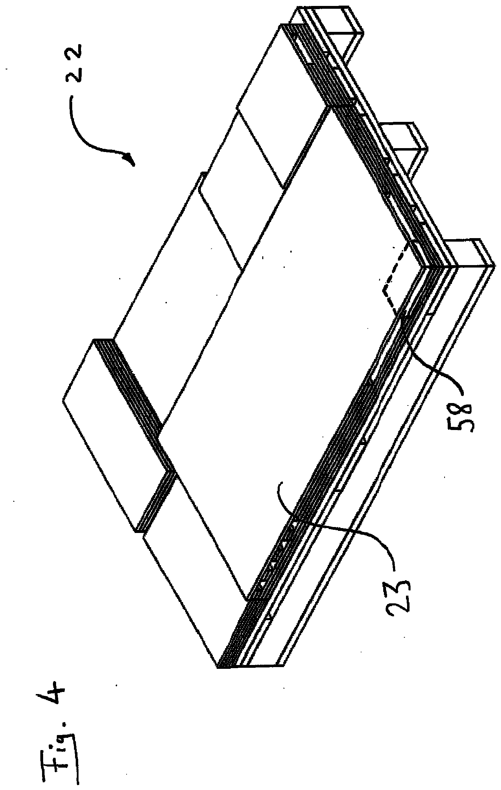

In den Figuren 4 bis 6 sind abgestapelte Werkstücke 23 auf den Abstapelplätzen 22 dargestellt. Hierbei sind in der jeweiligen Figur die Stapel der Werkstücke 23 nach jeweils unterschiedlichen Kriterien bezüglich der Stapelkonfiguration optimiert.

Figur 4 zeigt einen Stapel von bearbeiteten Werkstücken 23, die möglichst dicht abgestapelt wurden. Aus den ermittelten die Werkstücke 23 charakterisierenden Parametern, vorliegend beispielhaft der Dimension, und dem vorgegebenen Optimierungsparameter, vorliegend beispielhaft eine möglichst große Packungsdichte der abgestapelten bearbeiteten Werkstücke 23, hatte die Steuereinrichtung 39 somit bei jeder Ausgabe eines bearbeiteten Werkstücks 18 auf den Entnahmetisch 16b auf der Anzeigeeinrichtung 36 eine Anweisung an die Bedienperson für die Handhabung des besagten Werkstücks 18 angezeigt (siehe Figuren 3a, 3b und 3c), die dazu führte, dass der vorgegebene Optimierungsparameter - nämlich eine maximale Packungsdichte - bestmöglich erreicht wurde. Zusätzlich wurde als zweiter niedrigerer gewichteter Optimierungsparameter ein stabiler Stapelaufbau vorgegeben und Stabilisationsstücke, von denen eines ein Bezugszeichen 58 trägt, in den Stapel mit eingestapelt.

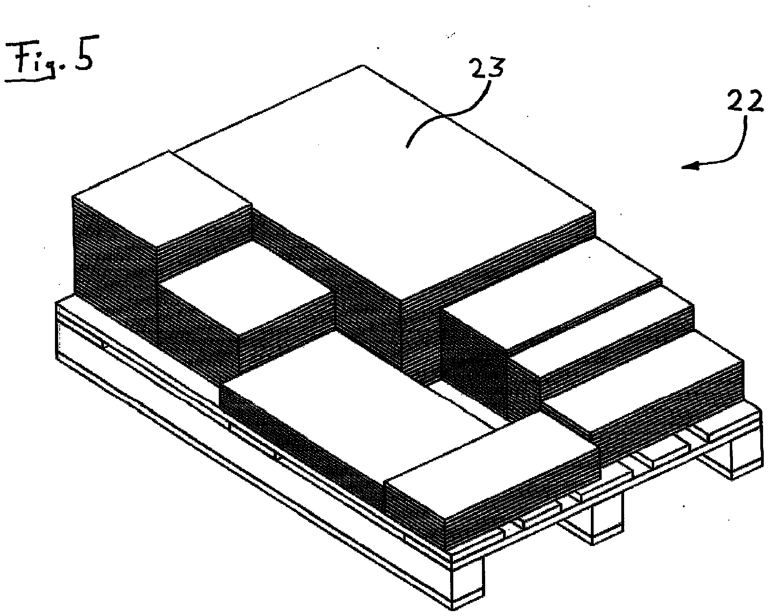

Analog hierzu zeigt Figur 5 einen Stapel von Werkstücken 23, der nach Kommissionierung der verschiedenen Werkstücke optimiert wurde.

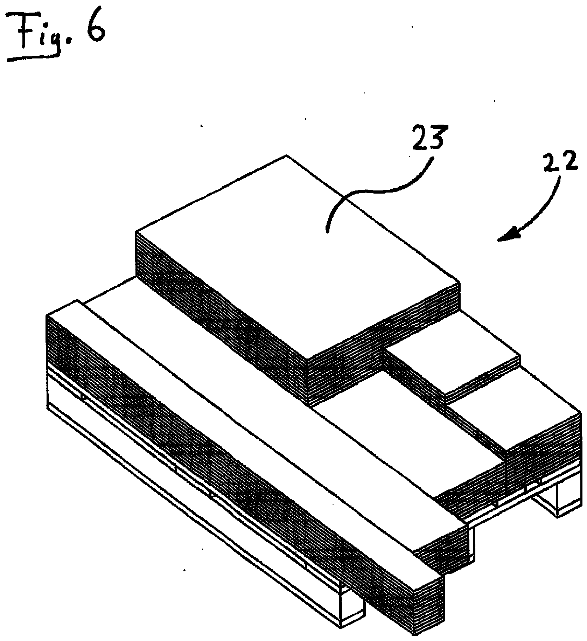

Analog hierzu zeigt Figur 6 einen Stapel von Werkstücken 23, der ebenfalls bezüglich der Kommissionierung der einzelnen Werkstücke optimiert wurde, jedoch sind in diesem Beispiel abgestapelte Werkstücke 23 von Übergröße enthalten.

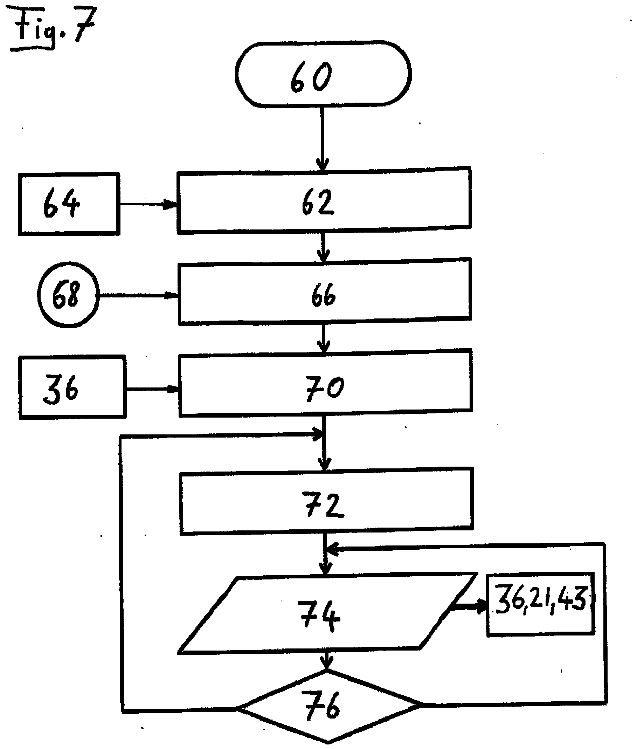

Figur 7 zeigt ein Flussdiagramm für ein Verfahren zur Optimierung einer Stapelfolge. Dieses Verfahren ist als Computerprogramm auf einem Speicher der Steuereinrichtung 39 abgespeichert und in der Steuereinrichtung 39 ablauffähig.

Ein Diagrammblock 60 indiziert den Beginn der Stapeloptimierung. Daran anschließend erfolgt die Erfassung des Schnittplans, dargestellt durch Diagrammblock 62. Der Schnittplan wird beispielsweise von der Steuereinrichtung 39 erstellt nach bestimmten Vorgaben bezüglich der Abmessungen der herzustellenden Werkstücke, welche der Steuereinrichtung 39 wiederum durch eine Datenschnittstelle 64 übermittelt wurden. Der Schnittplan kann aber auch extern erstellt und durch die Datenschnittstelle 39S oder 64 übermittelt worden sein.

Im nächsten Schritt werden die das bearbeitete Werkstück 18 charakterisierenden Parameter - beispielsweise dessen Länge, Breite und Höhe - ermittelt, dargestellt durch Diagrammblock 66. Hierzu kann, wie oben erwähnt, die Steuereinrichtung 39 Informationen von entsprechenden Sensoren 68 oder von der Kamera 33 erhalten. Diagrammblock 70 stellt die Erfassung der Optimierungsparameter - beispielsweise eine möglichst große Packungsdichte - dar, die manuell beispielsweise am berührungssensitiven Flachbildschirm 36 von der Bedienperson eingegeben werden, einschließlich eventueller Gewichtungsparameter.

Danach wird, dargestellt durch den Diagrammblock 72, nach vorgegebenen Optimierungsalgorithmen die Stapelfolge, also die Reihenfolge, Position und Ausrichtung der an einem bestimmten Abstapelplatz 22 abzustapelnden Werkstücke 18 optimiert. Die resultierende Soll-Position und Soll-Ausrichtung für das gerade auf dem Entnahmetisch 16b liegende und als nächstes abzustapelnde Werkstück 18 werden durch eine entsprechende Ansteuerung der Anzeigeeinrichtung 36, 21 sowie des Etikettendruckers 43 vorgegeben, dargestellt durch Diagrammblock 74. Es folgt eine Überprüfung der Soll- und Istwerte, jeweils für Position und Ausrichtung, dargestellt durch den Diagrammblock 76. Sind die Soll- und Istwerte für Position und Ausrichtung übereinstimmend, so erfolgt die Anzeige der Soll-Position und -Ausrichtung für das folgende Werkstück, dargestellt durch einen Rücksprung vor den Block 74. Sind Soll- und Istwerte der Position und Ausrichtung nicht identisch, so erfolgt eine erneute Optimierung der Stapelfolge für die folgenden Werkstücke, dargestellt durch einen Rücksprung vor den Block 72.

Der berührungssensitive Bildschirm 36 kann auch dazu verwendet werden, dass von der Bedienperson ein bearbeitetes Werkstück als Ausschuss eingegeben oder markiert wird. Ebenso können dort Abweichungen der Ist-Position von der Soll-Position und/oder der Ist-Ausrichtung von der Soll-Ausrichtung eingegeben werden. Diese Abweichung der Ist- von der Soll-Position und -Ausrichtung kann aber auch über die Erfassungseinrichtung 30 erkannt und an die Steuereinrichtung 39 kommuniziert werden. Die Steuereinrichtung 39 kann diese Information bei der Ermittlung der Soll-Position und Soll-Ausrichtung für ein nachfolgendes bearbeitetes Werkstück 18 auf dem Abstapelplatz 22 berücksichtigen.

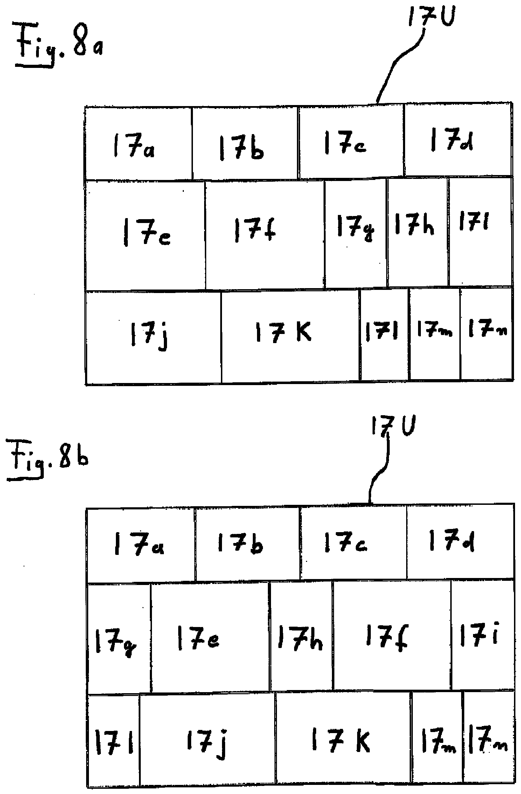

Die Figuren 8a und 8b zeigen einen Schnittplan vor und nach einer Optimierung der Reihenfolge einer Produktion von Werkstücken 18 innerhalb eines Werkstückstreifens. Der Außenumriss 17U des Schnittplans stellt die Abmessung eines zu bearbeitenden großformatigen plattenförmigen Werkstücks 17 dar. Die Flächen der einzelnen zu produzierenden Werkstücke sind jeweils durch die Bezugszeichen 17a-n bezeichnet. Innerhalb der Streifen (17a-d, 17e-i, 17j-n) kann die Reihenfolge der durchzuführenden Schnitte im Rahmen einer Optimierung geändert werden. Der vorgegebene Schnittplan ist in Figur 8a dargestellt, der Schnittplan mit geänderter Teilereihenfolge ist in Figur 8b dargestellt. Hierbei wurde im Zuge einer Optimierung die Schnittreihenfolge in den Streifen 17e-i und 17j-n geändert. Die Schnittreihenfolge in dem Streifen 17e-i wurde von einer Produktionsreihenfolge der Werkstücke 17e, 17f, 17g, 17h und 17i gemäß einer Optimierung geändert zu 17g, 17e, 17h, 17f und 17i. Analog wurde die Schnittreihenfolge in Streifen 17j-17n von der Produktionsreihenfolge 17j, 17k, 17l, 17m und 17n in die optimierte Produktionsreihenfolge 17l, 17j, 17k, 17m und 17n geändert.

In den Figuren nicht dargestellt ist eine baulich von der Plattenbearbeitungsanlage trennbare Ausführung der Steuereinrichtung 39 sowie der Anzeige 36. In einer solchen Ausführungsform sind sowohl Steuereinrichtung 39 sowie Anzeige 36 so gestaltet, dass sie baulich von der Plattenanlage getrennte Komponenten darstellen, beispielsweise ein tragbares Gerät.

## Patentansprüche

1. Plattenbearbeitungsanlage (10), welche umfasst: eine Bearbeitungseinrichtung (12) zum Bearbeiten, insbesondere Aufteilen großformatiger plattenförmiger Werkstücke (17), mindestens einen im Materialfluss nach der Bearbeitungseinrichtung (12) angeordneten Abstapelplatz (22) zum Abstapeln bearbeiteter Werkstücke (18) und eine Steuereinrichtung (39), **dadurch gekennzeichnet, dass** die Plattenbearbeitungsanlage (10) eine von der Steuereinrichtung (39) angesteuerte Ausgabeeinrichtung (21), welche Informationen zur Bedienung der Plattenbearbeitungsanlage (10) ausgibt, in Form eines Projektors oder einer Laserprojektionsanzeige umfasst, wobei die Steuereinrichtung (39) die Ausgabeeinrichtung (21) so ansteuert, dass Abstapelinformationen bezüglich der Soll-Position und Soll-Ausrichtung auf dem Abstapelplatz (22) für ein spezifisches bearbeitetes Werkstück (18) mittels des Projektors oder der Laserprojektionsanzeige visualisiert werden.

2. Plattenbearbeitungsanlage (10) nach Anspruch 1, **dadurch gekennzeichnet, dass** die Abstapelinformationen in Form der Soll-Position sowie der Soll-Ausrichtung direkt auf den Abstapelplatz projiziert werden.

3. Plattenbearbeitungsanlage (10) nach wenigstens einem der vorhergehenden Ansprüche, **dadurch gekennzeichnet, dass** das Ausgeben der Informationen bezüglich der Soll-Position und Soll-Ausrichtung automatisch und zeitlich angepasst an den Betrieb der Plattenbearbeitungsanlage (10) erfolgt.

4. Plattenbearbeitungsanlage (10) nach einem der vorangegangenen Ansprüche, **dadurch gekennzeichnet, dass** im Materialfluss nach der Bearbeitungseinrichtung (12) ein Werkstückpuffer (19) zum Zwischenlagern eines bearbeiteten aber noch nicht abzustapelnden Werkstücks (18) angeordnet ist.

5. Plattenbearbeitungsanlage (10) nach Anspruch 4, **dadurch gekennzeichnet, dass** sie eine Signaleinrichtung (20) aufweist, welche einen Bedarf für eine Zwischenlagerung über ein optisches oder akustisches oder über ein Vibrationssignal bzw. haptisches Signal anzeigen kann.

6. Plattenbearbeitungsanlage (10) nach einem der vorangegangenen Ansprüche, **dadurch gekennzeichnet, dass** sie eine Erfassungseinrichtung (30) umfasst, welche eine Ist-Position und Ist-Ausrichtung der abgestapelten Werkstücke (23) erfassen kann und diese Information an die Steuereinrichtung (39) übermittelt, und dass die Steuereinrichtung (39) diese Information bei der Ermittlung der Soll-Position und Soll-Ausrichtung für ein nachfolgendes bearbeitetes Werkstück (18) auf dem Abstapelplatz (22) berücksichtigt.

7. Plattenbearbeitungsanlage (10) nach einem der vorangegangenen Ansprüche, **dadurch gekennzeichnet, dass** sie eine Einrichtung (33) umfasst, welche eine Produktion von als Ausschuss anzusehenden bearbeiteten Werkstücken (18) erfasst oder eine Eingabe diesbezüglicher Informationen ermöglicht und diese Information an die Steuereinrichtung (39) übermittelt, und dass die Steuereinrichtung (39) diese Information bei der Ermittlung der Soll-Position und Soll-Ausrichtung für mindestens ein nachfolgendes bearbeitetes Werkstück (18) auf dem Abstapelplatz (22) berücksichtigt.

8. Plattenbearbeitungsanlage (10) nach einem der vorangegangenen Ansprüche, **dadurch gekennzeichnet, dass** die Plattenbearbeitungsanlage (10) eine Vorrichtung zum Erstellen von Etiketten (43) aufweist, welche auf den bearbeiteten Werkstücken (18) aufgebracht werden können und Informationen bezüglich der Soll-Position und Soll-Ausrichtung der bearbeiteten Werkstücke (18) insbesondere in Form von Piktogrammen (46) wiedergeben.

9. Plattenbearbeitungsanlage (10) nach einem der vorangegangenen Ansprüche, **dadurch gekennzeichnet, dass** die Plattenbearbeitungsanlage (10) eine elektronische Schnittstelle (39S) aufweist, über welche Informationen bezüglich der Ist- und oder Soll-Position und -Ausrichtung der bearbeiteten Werkstücke (18) elektronisch kommuniziert werden können.

10. Verfahren zum Betreiben einer Plattenbearbeitungsanlage (10), welches folgende Schritte umfasst:
Bearbeiten eines großformatigen plattenförmigen Werkstücks mittels einer Bearbeitungseinrichtung (12),
Abstapeln des bearbeiteten Werkstücks (18) auf einem im Materialfluss nach der Bearbeitungseinrichtung (12) angeordneten Abstapelplatz (22),
**dadurch gekennzeichnet, dass** es ferner umfasst:
Ansteuern einer Ausgabeeinrichtung (21, 36) in Form eines Projektors oder einer Laserprojektionsanzeige mittels einer Steuereinrichtung (39) zur Ausgabe in Form einer Visualisierung von Abstapelinformationen bezüglich einer Soll-Position und einer Soll-Ausrichtung auf dem Abstapelplatz (22) für ein spezifisches bearbeitetes Werkstück (18), wodurch einer Bedienperson Vorgaben für die Stapelbildung gemacht werden.

## Claims

1. Panel machining system (10), which comprises: a machining device (12) for machining, in particular dividing, large-scale panel-shaped workpieces (17), at least one stacking station (22) arranged downstream of the machining device (12) in the material flow for stacking machining workpieces (18), and a control device (39), **characterized in that** the panel machining system (10) comprises an output device (21), which is controlled by the control device (39) and outputs information for operating the panel machining system (10), in the form of a projector or a laser projection display, the control device (39) controlling the output device (21) such that stacking information regarding the target position and target orientation on the stacking station (22) for a specific machined workpiece (18) is visualized by means of the projector or the laser projection display.

2. Panel machining system (10) according to claim 1, **characterized in that** the stacking information in the form of the target position and the target orientation is projected directly onto the stacking station.

3. Panel machining system (10) according to at least one of the preceding claims, **characterized in that** the output of information regarding the target position and target orientation is automatic and timed to match the operation of the panel machining system (10).

4. Panel machining system (10) according to any of the preceding claims, **characterized in that** a workpiece buffer (19) is arranged downstream of the machining device (12) in the material flow for the temporary storage of a workpiece (18) that has been machined but is not yet to be stacked.

5. Panel machining system (10) according to claim 4, **characterized in that** it has a signaling device (20) which can indicate a need for intermediate storage via an optical signal or acoustic signal or via a vibration signal or haptic signal.

6. Panel machining system (10) according to any of the preceding claims, **characterized in that** it comprises a detection device (30) which can detect an actual position and actual orientation of the stacked workpieces (23) and transmits this information to the control device (39), **and in that** the control device (39) takes this information into account when determining the target position and target orientation for a subsequent machined workpiece (18) on the stacking station (22).

7. Panel machining system (10) according to any of the preceding claims, **characterized in that** it comprises a device (33) which detects a production of machined workpieces (18) to be regarded as rejects or enables an input of relevant information and transmits this information to the control device (39), **and in that** the control device (39) takes this information into account when determining the target position and target orientation for at least one subsequent machined workpiece (18) on the stacking station (22).

8. Panel machining system (10) according to any of the preceding claims, **characterized in that** the panel machining system (10) has a mechanism for producing labels (43) which can be applied to the machined workpieces (18) and which provide information regarding the target position and target orientation of the machined workpieces (18), in particular in the form of pictograms (46).

9. Panel machining system (10) according to any of the preceding claims, **characterized in that** the panel machining system (10) has an electronic interface (39S) via which information regarding the actual and/or target position and orientation of the machined workpieces (18) can be communicated electronically.

10. Method for operating a panel machining system (10), which comprises the following steps:
machining a large-scale panel-shaped workpiece by means of a machining device (12),
stacking the machined workpiece (18) on a stacking station (22) arranged downstream of the machining device (12) in the material flow,
**characterized in that** the method further comprises:
controlling an output device (21, 36) in the form of a projector or a laser projection display by means of a control device (39) for outputting, in the form of a visualization, stacking information regarding a target position and a target orientation on the stacking station (22) for a specific machined workpiece (18), as a result of which an operator is given instructions for the stack formation.

## Revendications

1. Installation d'usinage de plaques (10), laquelle comprend : un système d'usinage (12) pour l'usinage, en particulier la division de pièces à usiner en forme de plaques grand format (17), au moins un emplacement d'empilage (22) disposé dans le flux de matériaux après le système d'usinage (12) pour l'empilage de pièces usinées (18) et un système de commande (39), **caractérisée en ce que** l'installation d'usinage de plaques (10) comprend un système de sortie (21) piloté par le système de commande (39), qui fournit des informations pour la commande de l'installation d'usinage de plaques (10), sous la forme d'un projecteur ou d'un affichage de projection laser, dans laquelle le système de commande (39) pilote le système de sortie (21) de telle sorte que des informations d'empilage concernant la position théorique et l'orientation théorique sur l'emplacement d'empilage (22) pour une pièce usinée (18) spécifique sont visualisées au moyen du projecteur ou de l'affichage de projection laser.

2. Installation d'usinage de plaques (10) selon la revendication 1, **caractérisée en ce que** les informations d'empilage sous la forme de la position théorique ainsi que de l'orientation théorique sont projetées directement sur l'emplacement d'empilage.

3. Installation d'usinage de plaques (10) selon au moins l'une quelconque des revendications précédentes, **caractérisée en ce que** la sortie des informations concernant la position théorique et l'orientation théorique s'effectue automatiquement et de manière adaptée dans le temps au fonctionnement de l'installation d'usinage de plaques (10).

4. Installation d'usinage de plaques (10) selon l'une quelconque des revendications précédentes, **caractérisée en ce qu'**un tampon de pièce (19) est disposé dans le flux de matière après le système d'usinage (12) pour le stockage intermédiaire d'une pièce usinée (18) qui n'est pas encore à empiler.

5. Installation d'usinage de plaques (10) selon la revendication 4, **caractérisée en ce qu'**elle présente un système de signalisation (20) qui peut indiquer un besoin de stockage intermédiaire par l'intermédiaire d'un signal optique ou acoustique ou par un signal vibratoire ou haptique.

6. Installation d'usinage de plaques (10) selon l'une quelconque des revendications précédentes, **caractérisée en ce qu'**elle comprend un système de détection (30) qui peut détecter une position réelle et une orientation réelle des pièces empilées (23) et qui transmet cette information au système de commande (39), et que le système de commande (39) prend en compte cette information lors de la détermination de la position théorique et de l'orientation théorique pour une pièce usinée (18) suivante sur l'emplacement d'empilage (22).

7. Installation d'usinage de plaques (10) selon l'une quelconque des revendications précédentes, **caractérisée en ce qu'**elle comprend un système (33) qui détecte une production de pièces usinées (18) à considérer comme rebut ou qui permet une saisie d'informations à ce sujet et transmet cette information au système de commande (39), et que le système de commande (39) tient compte de cette information lors de la détermination de la position théorique et de l'orientation théorique pour au moins une pièce usinée (18) suivante sur l'emplacement d'empilage (22).

8. Installation d'usinage de plaques (10) selon l'une quelconque des revendications précédentes, **caractérisée en ce que** l'installation d'usinage de plaques (10) présente un dispositif de création d'étiquettes (43), lesquelles peuvent être apposées sur les pièces usinées (18) et restituent des informations concernant la position théorique et l'orientation théorique des pièces usinées (18), notamment sous la forme de pictogrammes (46).

9. Installation d'usinage de plaques (10) selon l'une quelconque des revendications précédentes, **caractérisée en ce que** l'installation d'usinage de plaques (10) présente une interface électronique (39S), par l'intermédiaire de laquelle des informations concernant les positions et orientations réelles et/ou théoriques des pièces usinées (18) peuvent être communiquées électroniquement.

10. Procédé pour faire fonctionner une installation d'usinage de plaques (10), lequel comprend les étapes suivantes :
l'usinage d'une pièce à usiner en forme de plaque grand format au moyen d'un système d'usinage (12),
l'empilage de la pièce usinée (18) sur un emplacement d'empilage (22) disposé dans le flux de matière après le système d'usinage (12),
**caractérisé en ce qu'**il comprend en outre :
le pilotage d'un système de sortie (21, 36) sous la forme d'un projecteur ou d'un affichage de projection laser au moyen d'un système de commande (39) pour la sortie sous la forme d'une visualisation d'informations d'empilage concernant une position théorique et une orientation théorique sur l'emplacement d'empilage (22) pour une pièce usinée (18) spécifique, ce qui fournit à un opérateur des directives pour la formation de piles.
